# FASCICULE DE BREVET EUROPEEN

(11) **EP 4 259 465 B1**
(45) Date de publication et mention de la délivrance du brevet: **14.05.2025**
(21) Numéro de dépôt: 21848162.0
(22) Date de dépôt: 02.12.2021
(51) Int. Cl.: B60K 11/02, F01P 3/20, E02F 9/22, F04B 53/08, H02K 9/19, F01P 3/12, H02K 11/33, H02K 9/197, H02K 7/14, F04B 17/03, F04B 1/12, F01P 3/00, B60K 1/00

(54) **BLOC D'ALIMENTATION COMPRENANT UNE MACHINE HYDRAULIQUE PRÉSENTANT UNE INTÉGRATION AMELIORÉE**
STROMVERSORGUNG MIT EINER HYDRAULISCHEN MASCHINE MIT VERBESSERTER INTEGRATION
POWER SUPPLY COMPRISING A HYDRAULIC MACHINE EXHIBITING IMPROVED INTEGRATION

(30) Priorité: 11.12.2020 FR 2013067
(43) Date de publication de la demande: 18.10.2023
(73) Titulaire: Poclain Hydraulics Industrie, 60410 Verberie (FR)
(72) Inventeur: HEREN, Jean, 60410 VERBERIE (FR)
(74) Mandataire: Cabinet Beau de Loménie
(86) Numéro de dépôt international: PCT/FR2021/052180
(87) Numéro de publication internationale: WO 2022/123149

(56) Documents cités:
- WO-A1-2013/068419
- WO-A1-2017/055137
- WO-A1-2019/182622
- WO-A2-2012/066067
- JP-A- 2002 227 645

## Description

### Domaine Technique

Le présent exposé concerne les blocs d'alimentation comprenant une machine hydraulique couplée à une machine primaire, et notamment les groupes électro-pompe pouvant par exemple être employés dans des systèmes hydrauliques, en particulier dans des transmissions hydrostatiques.

### Technique antérieure

L'intégration des différents composants est un paramètre important dans le domaine automobile, pour les poids lourds et les différents engins. L'intégration des composants est généralement accentuée selon le volume sur le marché considéré, notamment en raison des coûts liés à l'amélioration de l'intégration.

Il en résulte notamment que l'intégration des systèmes ayant des marchés plus segmentés est généralement moindre, ce qui aboutit fréquemment à une pluralité de composants individuels. On peut notamment citer les machines hydrauliques qui sont largement utilisées, mais pour des applications dans des séries assez réduites. Or, on comprend qu'une intégration moindre des différents composants peut entrainer de multiples problématiques, allant d'un possible défaut de refroidissement, des risques de ruptures et d'arrachement accrus en raison des liaisons requises, aux possibles expositions au milieu ambiant.

En effet des blocs d'alimentation composés d'éléments non intégrés présentent des liaisons logiques et de puissance, fluidiques ou électriques qui sont encombrantes, susceptibles d'être arrachées et qui peuvent émettre des bruits aériens et solidiens, ainsi qu'un encombrement par les périphériques, et un aspect non lisse.

Le présent exposé vise ainsi à proposer un système comprenant une machine hydraulique et une machine primaire répondant au moins partiellement à ces

Un système de l'art antérieur est par exemple connu du document WO2017/055137A1.

### Exposé de l'invention

Le présent exposé concerne ainsi un système selon la revendication 1.

Selon un exemple, la machine primaire comprend un carter primaire, la machine hydraulique comprend un carter machine, le carter primaire et le carter machine étant solidarisés l'un à l'autre, et comprenant des conduits internes communiquant à une interface entre le carter primaire et le carter machine, permettant un passage du fluide de refroidissement entre le carter primaire et le carter machine.

Tout ou partie desdits conduits internes peuvent alors être réalisés de manière à réaliser une circulation de fluide de refroidissement dans des plans perpendiculaires à un axe de la machine primaire. Selon un exemple, le variateur de fréquence comprend un carter de variateur, et dans lequel le carter primaire et le carter de variateur sont solidarisés l'un à l'autre, le circuit de refroidissement comprenant des conduits positionnés entre le carter primaire et le carter de variateur.

Selon un exemple, le carter primaire comprend des conduits formés dans un segment dudit carter primaire venant au contact du carter de variateur, lesdits conduits faisant partie du circuit de refroidissement.

Selon un exemple, la machine primaire est un moteur, par exemple un moteur électrique, par exemple un moteur électrique à courant continu ou à courant alternatif. Par exemple un moteur à courant alternatif monophasé ou triphasé. Par exemple un moteur à courant alternatif triphasé synchrone à aimant permanent ou à reluctance variable. Le moteur électrique peut aussi, par exemple, être asynchrone à cage d'écureuil ou à rotor bobiné.

Le moteur peut être un moteur à flux radial ou axial. Particulièrement un moteur électrique à flux radial.

Selon un exemple le moteur électrique est un moteur électrique qui tourne dans l'air : le rotor et le stator sont séparés par de l'air et non de l'huile.

Selon un exemple, la machine hydraulique est une machine volumétrique (ou à déplacement positif) c'est-à-dire qui fait le lien entre un débit de fluide traversant et un mouvement mécanique entrant ou sortant par une succession de volumes fermés.

Selon l'invention, la machine hydraulique est une pompe hydraulique ou un moteur hydraulique adapté pour fonctionner au moyen d'un fluide de travail, qui entre dans la machine hydraulique à une première pression et en ressort à une seconde pression, distincte de la première pression, par exemple une pompe hydraulique à pistons, une pompe hydraulique à pistons radiaux, une pompe hydraulique à pistons radiaux et à came multilobe, une pompe hydraulique à axe brisé ou à plateau, étant entendu qu'un tel système est typiquement réversible, et que la machine hydraulique peut également présenter un fonctionnement de moteur, le machine primaire réalisant alors une fonction de générateur.

Selon un exemple, le carter d'ensemble comprend des moyens de fixation à un support, lesdits moyens de fixation étant munis d'éléments d'amortissement.

Selon un exemple, le carter d'ensemble comprend un orifice d'admission et un orifice de refoulement reliés au circuit de refroidissement pour la circulation du fluide de refroidissement dans le carter d'ensemble, et un orifice d'admission et un orifice de refoulement reliés à une admission et à un refoulement de la machine hydraulique pour la circulation d'un fluide de travail de la machine hydraulique.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 est une représentation schématique d'un système selon un aspect de l'invention.
[Fig. 2] La figure 2 est une vue d'un exemple de réalisation.
[Fig. 3] La figure 3 est une vue d'un exemple de réalisation.
[Fig. 4] La figure 4 est une autre vue d'un exemple de réalisation.
[Fig. 5] La figure 5 est une autre vue d'un exemple de réalisation.
[Fig. 6] La figure 6 est une autre vue d'un exemple de réalisation.
[Fig. 7] La figure 7 est une vue d'un autre exemple de réalisation.

Sur l'ensemble des figures, les éléments en commun sont repérés par des références numériques identiques.

### Description des modes de réalisation

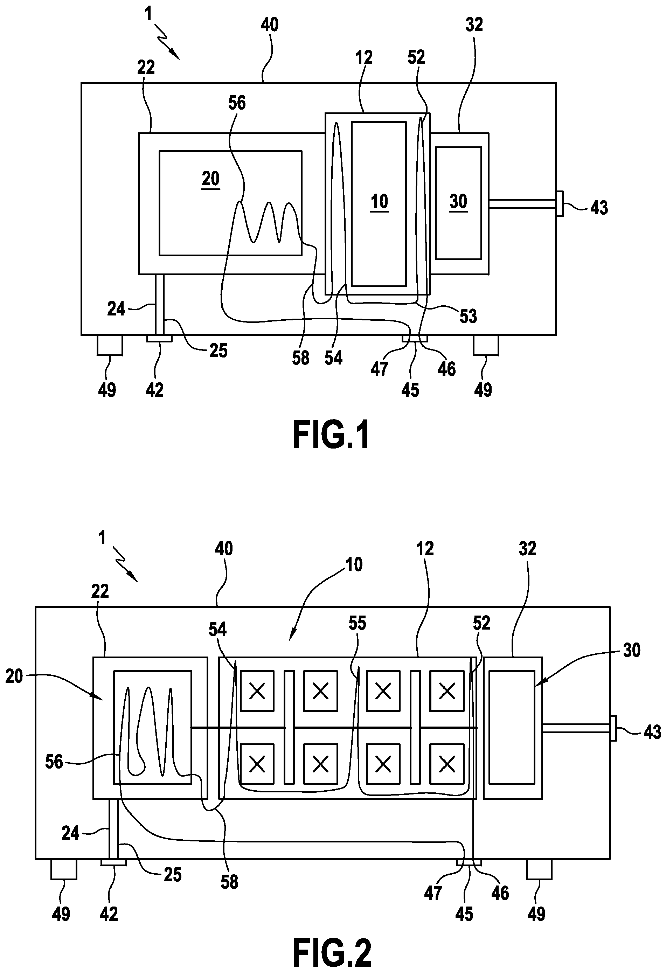

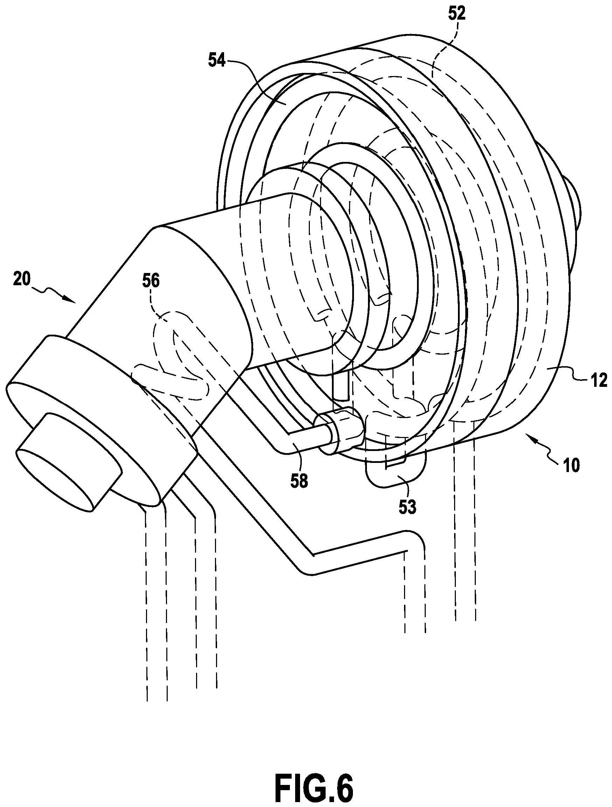

On décrit à présent un exemple de réalisation de l'invention en référence aux figures 1 à 6.

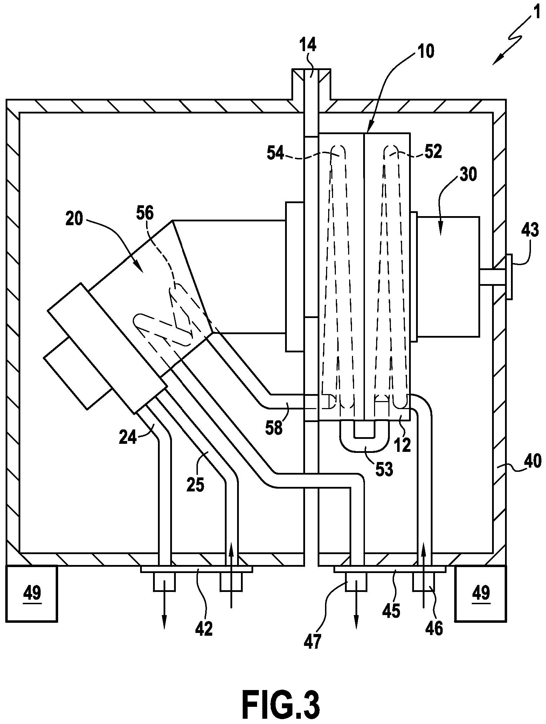

On représente schématiquement sur les figures un système 1 selon le présent exposé, comprenant une machine primaire 10, une machine hydraulique 20 et un variateur de puissance 30 disposés dans un carter d'ensemble 40. La figure 1 est une représentation schématique d'un tel système 1, la figure 2 en présente une variante, tandis que les figures 3 à 6 illustrent un exemple particulier de réalisation.

La machine hydraulique 20 est typiquement une pompe hydraulique, par exemple une pompe hydraulique à pistons. Plus généralement, la machine hydraulique 20 comprend un barillet ou un bloc cylindre présentant une pluralité de logements dans lesquels coulissent des pistons, lesdits pistons étant en appui d'autre part par exemple contre un plateau. La machine primaire 10 est typiquement un moteur électrique. La machine primaire 10 est typiquement configurée de manière à assurer l'entrainement d'un arbre de la machine hydraulique 20.

La machine primaire 10 peut par exemple être un moteur électrique à flux axial, par exemple un moteur à flux axial contenant un disque portant des aimants et deux stators portant les éléments de bobinage. De manière alternative le moteur à flux axial peut être composé de N disques portant les aimants et de 2N stators comportant les éléments de bobinages, N étant un nombre entier naturel supérieur ou égal à 2.

La machine primaire 10 comprend un carter primaire 12, la machine hydraulique 20 comprend un carter machine 22 et le variateur de puissance 30 comprend un carter de variateur 32.

Dans un premier mode de fonctionnement, la machine primaire 10 est typiquement couplée à la machine hydraulique 20 de sorte qu'un arbre de la machine primaire 10 vienne entrainer un arbre de la machine hydraulique qui présente alors un fonctionnement de pompe. L'arbre de la machine hydraulique 20 peut par exemple être accouplé à l'arbre de la machine primaire 10 au moyen de cannelures internes et externes qui viennent s'engager, ou par tout autre moyen adapté. On comprend qu'un fonctionnement inverse est également possible ; la machine hydraulique 20 peut présenter un fonctionnement de moteur qui vient alors entrainer en rotation l'arbre de la machine primaire 10 qui devient dans ce cas un générateur électrique, par exemple en vue d'une restitution d'énergie dans le cas d'un système réversible.

Comme on le représente schématiquement sur la figure 1, la machine primaire 10 est typiquement positionnée entre la machine hydraulique 20 et le variateur de puissance 30.

Plus précisément, le carter machine 22 est typiquement solidarisé au carter primaire 12, et le carter de variateur 32 est typiquement également solidarisé au carter primaire 12, de sorte que la machine hydraulique 20 et le variateur de puissance 30 soient par exemple de part et d'autre de la machine primaire 10.

Dans l'exemple représenté sur les figures 3 à 6, le carter primaire 12 comprend des segments de fixation tels que des pattes de fixation 14 auxquelles est fixé le carter d'ensemble 40. Dans un tel mode de réalisation, le carter primaire 12 réalise donc la liaison entre le carter d'ensemble 40, le variateur de puissance 30 et la machine hydraulique 20. On comprend cependant bien que d'autres variantes sont possibles, par exemple en fixant le carter d'ensemble 40 au carter machine 22 et/ou au carter de variateur 32.

Le carter d'ensemble 40 comprend typiquement une admission et un refoulement de fluide de travail de la machine hydraulique 20. Dans l'exemple illustré, l'admission et le refoulement sont regroupés sur une interface 42 à laquelle sont reliés des conduits hydrauliques 24 et 25 permettant des arrivées et des sorties de fluide de travail de la machine hydraulique 20. Par fluide de travail de la machine hydraulique, on entend ici le fluide qui entre dans la machine hydraulique 20 à une première pression et en ressort à une seconde pression, distincte de la première pression, après être passé notamment dans des conduits internes et les logements d'un barillet ou d'un bloc cylindres de la machine hydraulique 20. Le fluide de travail est ainsi à distinguer du fluide de refroidissement, qui est typiquement à une pression sensiblement constante qui est par exemple différente de la pression du fluide de travail, est isolé du fluide de travail (aux fuites près), et ne pénètre notamment pas dans les logements du barillet ou du bloc cylindres de la machine hydraulique dans lesquelles coulissent les pistons.

Le carter d'ensemble 40 comprend typiquement une interface électrique 43, par exemple sous la forme d'une plaque comprenant des connections électriques qui sont reliées par exemple au variateur de puissance 30 et/ou à la machine primaire 10.

Le système tel que proposé comprend un circuit de refroidissement assurant le refroidissement du variateur de puissance 30, de la machine primaire 10 et de la machine hydraulique 20.

Le carter d'ensemble 40 présente ainsi un une admission et un refoulement pour un fluide de refroidissement. Dans l'exemple illustré, le carter d'ensemble 40 comprend une interface d'échange 45 présentant un orifice d'admission 46 et un orifice de refoulement 47 pour un fluide de refroidissement. On comprend cependant que l'orifice d'admission 46 et l'orifice de refoulement 47 peuvent être positionnés dans des zones distinctes du carter d'ensemble 40.

Le système 50 comprend un circuit de refroidissement 50 relié à l'orifice d'admission 46 et à l'orifice de refoulement 47. Le circuit de refroidissement 50 tel que proposé est un circuit de refroidissement commun, qui va assurer le refroidissement du variateur de puissance 30, de la machine primaire 10 et de la machine hydraulique 20 avec un même fluide de refroidissement. Le fluide de refroidissement est par exemple le même fluide que le fluide de travail de la machine hydraulique, par exemple de l'huile.

On représente schématiquement sur la figure 1 un exemple de circuit de refroidissement 50 selon un aspect de l'invention.

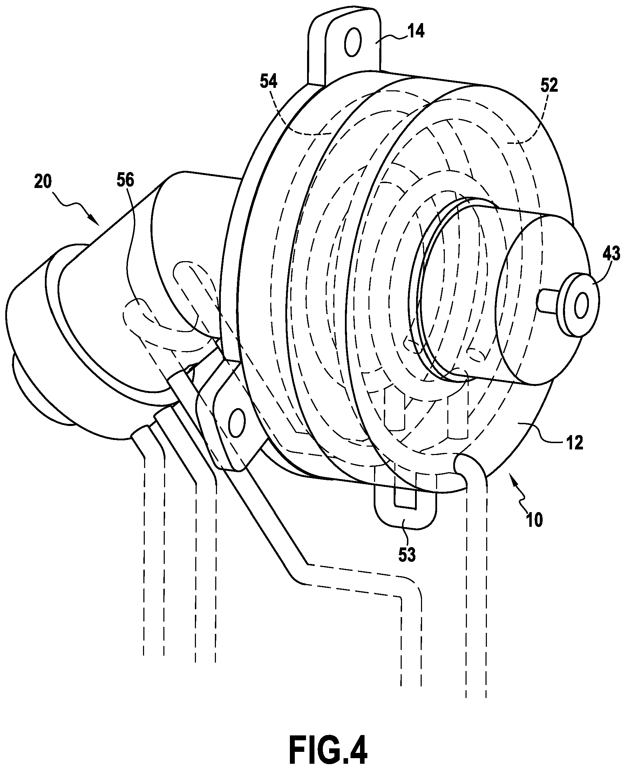

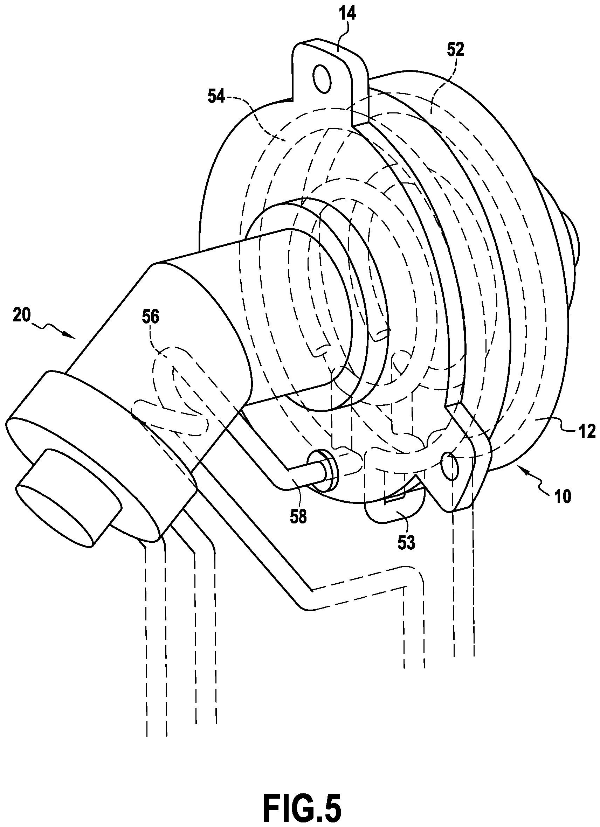

Comme représenté schématiquement, le carter primaire 12 comprend des conduits internes 52 et 54 adaptés pour permettre la circulation du fluide de refroidissement. Ces conduits internes 52 et 54 sont typiquement formés respectivement dans une portion du carter primaire 12 faisant l'interface avec le variateur de puissance 30, et dans une portion du carter primaire 12 faisant l'interface avec la machine hydraulique 20. Les figures 4 et 5 représentent un tel mode de réalisation dans lequel les conduits internes sont formés dans des portions du carter primaire 12, par exemple par moulage. Ces deux figures présentent le carter primaire 12 dont un capot formant l'interface avec le variateur de puissance 30 (pour la figure 4) et avec la machine hydraulique 20 (pour la figure 5) a été retiré afin de laisser visibles les conduits internes 52 et 54. En variante, les conduits internes 52 et 54 peuvent être formés dans les parois du carter primaire 12 qui ne comprend alors pas de tels capots.

Dans le mode de réalisation illustré sur les figures, la liaison entre ces conduits internes 52 et 54 est réalisée par un conduit 53 reliant ces deux faces opposées du carter primaire 12. Ce conduit 53 est ici protégé du milieu externe par le carter d'ensemble 40. Le conduit 53 est par exemple un conduit flexible.

D'une manière générale, les conduits externes (par opposition aux conduits internes, c'est-à-dire les conduits qui ne sont pas formés dans le carter primaire 12, dans le carter machine 22 ou dans le carter de variateur 32) peuvent être réalisés sous la forme de conduits flexibles, ce qui a l'avantage d'un montage aisé, et qui est particulièrement intéressant dans le cadre de l'invention car ces conduits sont par définition fragiles et sont avantageusement protégés par le carter d'ensemble 40. Les conduits flexibles permettent aussi de se conformer aux mouvements de vibration entre les différentes parties du système. Cependant d'une manière alternative, il est possible d'utiliser des conduits rigides.

En variante, on peut positionner des conduits adaptés pour assurer la circulation du fluide de refroidissement à l'interface entre le carter primaire 12 et le variateur de puissance 30, les conduits étant alors formés dans une pièce intermédiaire entre lesdits carters, et non pas directement dans une portion du carter primaire 12.

Dans le cas où la machine primaire 10 comprend plusieurs disques portant les aimants et le double de stators afin que chaque disque soit entouré par deux stators portant les éléments de bobinage, on peut aussi envisager que l'une des interfaces permettant le passage de fluide de refroidissement soit une interface entre deux stators du moteur à flux axial. La figure 2 présente une telle variante. Par rapport à la figure 1 décrite précédemment, on peut ici aménager un conduit interne 55 formé dans la machine primaire 10, entre les conduits internes 52 et 54, de manière à assurer une circulation du fluide de refroidissement entre les deux rotors ou les deux stators de la machine primaire 10. On comprend bien que ce mode de réalisation peut être généralisé pour une machine primaire 10 comprenant un nombre quelconque de conduits internes 55 interposés entre les conduits internes 52 et 54, notamment en fonction de la structure de la machine primaire 10 et plus précisément en fonction du nombre de disques et de stators qu'il comprend.

On comprend que le système tel que proposé est particulièrement adapté aux machines primaires telles que les moteurs à flux axial composés de tranches de stators et de rotors, en ce qu'il permet de faire une liaison de refroidissement efficace à la fois dans les stators de la machine primaire 10 et vers la machine hydraulique 20 et le variateur de puissance 30 avec peu de pièces et une grande compacité. La compacité du système proposé permet également une diminution du bruit rayonné.

La machine hydraulique 20 comprend également des conduits internes 56 pour permettre la circulation du fluide de refroidissement. Dans l'exemple illustré sur les figures 3 à 6 ; la liaison entre les conduits internes 54 de la machine primaire 10 et les conduits internes 56 de la machine hydraulique 20 est réalisée par un conduit 58 reliant un orifice qui débouche du carter primaire 12 et un orifice formé dans le carter machine 12. En variante, le carter primaire 12 et le carter machine 22 peuvent présenter des conduits internes communiquant à une interface entre le carter primaire 12 et le carter machine 22, le passage du fluide de refroidissement entre ces carters étant ainsi interne à ces carters.

La liaison entre ces différents conduits internes 52, 54 et 56 peut être réalisée via des conduits internes aux différents carters, ou via des raccords externes aux carters tels que des conduits, par exemple des conduits flexibles, ces derniers étant alors protégés du milieu extérieur par le carter d'ensemble 40. Les différents conduits internes et les éléments assurant leurs liaisons respectives forment ainsi le circuit de refroidissement du système 1 tel que présenté.

Les différents conduits formant le circuit de refroidissement 50 présentent typiquement une forme de labyrinthe, afin d'accroître la surface d'échange et ainsi améliorer le refroidissement réalisé. On voit notamment un tel mode de réalisation sur les figures 4 et 5 sur lesquelles les conduits internes 52 et 54 aménagés dans le carter primaire 12 présentent des formes de labyrinthes.

Tout ou partie des différents conduits internes formant le circuit de refroidissement 50 sont typiquement formés de manière à définir des circulations de fluide de refroidissement s'étendant selon différents plans perpendiculaires à un axe de la machine primaire 10.

Le circuit de refroidissement 50 tel que proposé réalise la circulation suivante pour le fluide de refroidissement :
- le fluide de refroidissement entre via l'orifice d'admission 46,
- il circule ensuite dans le conduit interne 52, situé à l'interface entre la machine primaire 10 et le variateur de puissance 30,
- il circule ensuite dans le conduit interne 54, situé à l'interface entre la machine primaire 10 et la machine hydraulique 20,
- il passe ensuite dans les conduits internes 56 formés dans la machine hydraulique 20,
- il rejoint l'orifice de refoulement 47.

Le circuit de refroidissement tel que proposé permet ainsi d'assurer un refroidissement de la machine primaire 10 et du variateur de puissance 30 dans un premier temps, puis de la machine hydraulique 20 au moyen d'un même fluide de refroidissement.

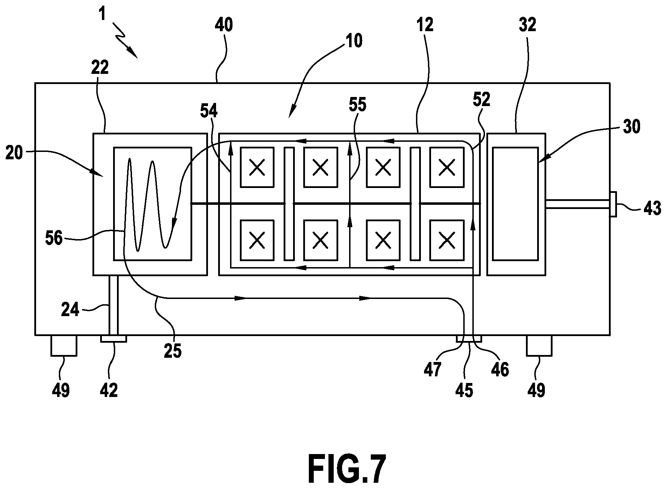

### La figure 7 est une variante de la figure 2.

Dans cette variante, le circuit de refroidissement réalisé dans la machine primaire 10 est réalisé selon une structure en parallèle, par opposition au mode de réalisation schématisé sur la figure 2 dans lequel le circuit de refroidissement présente un montage en série. Dans l'exemple représenté sur la figure 7, les conduits internes 52, 55 et 54 sont alimentés montés en parallèle. On comprend que ce mode de réalisation peut être généralisé pour un nombre quelconque de conduits internes dans le machine primaire 10 Par exemple pour un mode de réalisation ne présentant pas le conduit interne 55, les conduits internes 52 et 54 sont alors montés en parallèle. De même, le circuit de refroidissement 50 peut présenter un nombre quelconque de conduits internes 55 entre les conduits internes 52 et 54, la structure en parallèle étant alors similaire à celle présentée sur la figure 7.

Le fonctionnement est ici similaire au fonctionnement déjà décrit en référence aux figures précédentes, à la différence près que le refroidissement est ici réalisé de manière plus homogène entre les différents conduits internes 52, 55 et 54 par opposition au mode de réalisation représenté sur les figures précédentes dans lesquels le conduit interne 54 est alimenté par un fluide de refroidissement qui est déjà réchauffé du fait de son passage au préalable par les conduits internes 52 et le cas échéant 55. Le débit de fluide de refroidissement peut également être augmenté sans nécessiter une augmentation importante de la pression en amont.

Le fluide de refroidissement est ensuite typiquement renvoyé vers un échangeur thermique, un dispositif de filtration ou un réservoir typiquement muni d'un refroidisseur, qui peut être un réservoir à pression ambiante pouvant être commun avec le fluide de travail. L'injection de fluide de refroidissement via l'orifice d'admission 46 peut être réalisée à l'aide d'une pompe hydraulique, par exemple via une pompe de gavage couplée à un circuit hydraulique en boucle fermée associé à la machine hydraulique 20 dans la mesure où le fluide de refroidissement est identique au fluide de travail de la machine hydraulique 20. Il peut également d'agit d'une pompe hydraulique que l'on peut qualifier de « basse pression » ou encore une pompe hydraulique pour accessoires ou pour le pilotage d'actionneurs.

Le carter d'ensemble 40 comprend typiquement des moyens de fixation 49 tels que des plots, enveloppés dans un matériau adapté pour absorber les vibrations tel que du caoutchouc. Les moyens de fixation 49 permettent ainsi la fixation du système 1 sur un appareil ou une machine, tout en limitant la transmission de vibrations.

Le carter d'ensemble 40 est typiquement fermé et est avantageusement étanche de manière à protéger les éléments qu'il contient du milieu ambiant, et également pour limiter la propagation du bruit généré par les différents éléments internes au carter d'ensemble 40. Le carter d'ensemble 40 peut présenter une face interne recouverte d'un matériau adapté pour absorber ou limiter la transmission du son, par exemple un matériau alvéolaire.

Le système tel que proposé permet ainsi d'améliorer l'intégration des composants d'un système tel qu'une électro pompe. Les différents composants sont positionnés au sein d'un même carter d'ensemble 40 permettant de les protéger du milieu ambiant, et de mutualiser le circuit de refroidissement 50 pour ces différents composants, ce qui diminue le nombre de conduites et de surfaces, ce qui minimise le bruit rayonné. Le système tel que proposé permet donc de réduire le bruit aérien et solidien. On comprend notamment qu'une telle mutualisation du circuit de refroidissement permet d'éviter d'avoir à intégrer plusieurs circuits de refroidissement distincts dans un même système, ce qui est fortement avantageux en termes d'encombrement. Plus précisément, la compacité de l'ensemble permet diminuer l'encombrement total du système, et de placer facilement un carter d'ensemble. éléments logés dans le carter d'ensemble sont protégés, ce qui supprime les risques de rupture ou d'arrachement de conduites hydrauliques ou électriques, y compris pendant le transport et le stockage. Par ailleurs, le nombre réduit de composants permet de diminuer le cout et d'améliorer la fiabilité.

Par ailleurs, le fait d'employer un même fluide en tant que fluide de travail pour la machine hydraulique 20 et en tant que fluide de refroidissement pour le circuit de refroidissement 50 du système 1 permet d'éviter d'avoir plusieurs fluides non nécessairement miscibles dans un même système. L'emploi de différents fluides est en effet particulièrement complexe en termes de mise en œuvre pour assurer un non-mélange des fluides, et est problématiques en termes d'intégration et de maintenance du fait de la multiplication des éléments tels que les réservoirs de fluides.

Le système tel que proposé répond ainsi à une problématique récurrente et non résolue à ce jour notamment pour les blocs d'alimentation tels que les groupes électro pompes.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système (1) comprenant :
une machine primaire (10), une machine hydraulique (20) et un variateur de fréquence (30) disposés dans un carter d'ensemble (40),
la machine hydraulique (20) étant une pompe hydraulique ou un moteur hydraulique adaptée pour fonctionner au moyen d'un fluide de travail, qui entre dans la machine hydraulique (20) à une première pression et en ressort à une seconde pression, distincte de la première pression,
ledit système (1) étant **caractérisé en ce qu'**il comprend un circuit de refroidissement (50), adapté pour qu'un même fluide de refroidissement traverse une pluralité de conduits adaptés pour réaliser un refroidissement de la machine primaire (10), du variateur de fréquence (30) et de la machine hydraulique (20) dans lequel le fluide de refroidissement est identique à un fluide de travail de la machine hydraulique (20).

2. Système (1) selon la revendication 1, dans lequel
la machine primaire (10) comprend un carter primaire (12),
la machine hydraulique (20) comprend un carter machine (22),
le carter primaire (12) et le carter machine (22) étant solidarisés l'un à l'autre, et comprenant des conduits internes communiquant à une interface entre le carter primaire (12) et le carter machine (22), permettant un passage du fluide de refroidissement entre le carter primaire (12) et le carter machine (22).

3. Système (1) selon la revendication 2, dans lequel tout ou partie desdits conduits internes sont réalisés de manière à réaliser une circulation de fluide de refroidissement dans des plans perpendiculaires à un axe de la machine primaire (10).

4. Système (1) selon la revendication 2, dans lequel le variateur de fréquence (30) comprend un carter de variateur (32), et dans lequel le carter primaire (12) et le carter de variateur (32) sont solidarisés l'un à l'autre, le circuit de refroidissement (25) comprenant des conduits positionnés entre le carter primaire (12) et le carter de variateur (32).

5. Système (1) selon la revendication 3, dans lequel le carter primaire (12) comprend des conduits formés dans un segment dudit carter primaire (12) venant au contact du carter de variateur (32), lesdits conduits faisant partie du circuit de refroidissement (50).

6. Système (1) selon l'une des revendications 1 à 3, dans lequel la machine primaire (10) est un moteur électrique.

7. Système (1) selon la revendication 7, dans lequel la machine primaire (10) est un moteur électrique à flux axial.

8. Système (1) selon l'une des revendications 1 à 5, dans lequel le carter d'ensemble (40) comprend des moyens de fixation (49) à un support, lesdits moyens de fixation étant munis d'éléments d'amortissement.

9. Système (1) selon l'une des revendications précédentes, dans lequel le carter d'ensemble (40) comprend un orifice d'admission (46) et un orifice de refoulement (47) reliés au circuit de refroidissement (50) pour la circulation du fluide de refroidissement dans le carter d'ensemble (50), et un orifice d'admission et un orifice de refoulement reliés à une admission et à un refoulement de la machine hydraulique (20) pour la circulation d'un fluide de travail de la machine hydraulique (20).

## Patentansprüche

1. System (1), umfassend:
eine Primärmaschine (10), eine Hydraulikmaschine (20) und einen Frequenzumrichter (30), die in einem Gesamtgehäuse (40) angeordnet sind,
wobei die Hydraulikmaschine (20) eine Hydraulikpumpe oder ein Hydraulikmotor ist, die geeignet ist, mittels eines Arbeitsfluids zu arbeiten, das in die Hydraulikmaschine (20) mit einem ersten Druck eintritt und daraus mit einem zweiten Druck austritt, der von dem ersten Druck unterschiedlich ist,
wobei das System (1) **dadurch gekennzeichnet ist, dass** es einen Kühlkreis (50) umfasst, der dafür geeignet ist, dass ein und dasselbe Kühlfluid durch eine Vielzahl von Leitungen fließt, die geeignet sind, eine Kühlung der Primärmaschine (10), des Frequenzumrichters (30) und der Hydraulikmaschine (20) durchzuführen, wobei das Kühlfluid mit einem Arbeitsfluid der Hydraulikmaschine (20) identisch ist.

2. System (1) nach Anspruch 1, wobei die Primärmaschine (10) ein Primärgehäuse (12) umfasst,
die Hydraulikmaschine (20) ein Maschinengehäuse (22) umfasst,
wobei das Primärgehäuse (12) und das Maschinengehäuse (22) fest miteinander verbunden sind und interne Leitungen aufweisen, die an einer Schnittstelle zwischen dem Primärgehäuse (12) und dem Maschinengehäuse (22) miteinander kommunizieren und einen Durchgang des Kühlfluids zwischen dem Primärgehäuse (12) und dem Maschinengehäuse (22) ermöglichen.

3. System (1) nach Anspruch 2, wobei alle oder ein Teil der internen Leitungen derart ausgeführt sind, dass eine Zirkulation des Kühlfluids in Ebenen senkrecht zu einer Achse der Primärmaschine (10) erfolgt.

4. System (1) nach Anspruch 2, wobei der Frequenzumrichter (30) ein Umrichtergehäuse (32) umfasst und wobei das Primärgehäuse (12) und das Umrichtergehäuse (32) fest miteinander verbunden sind, wobei der Kühlkreis (25) Leitungen umfasst, die zwischen dem Primärgehäuse (12) und dem Umrichtergehäuse (32) positioniert sind.

5. System (1) nach Anspruch 3, wobei das Primärgehäuse (12) Leitungen umfasst, die in einem Segment des Primärgehäuses (12) ausgebildet sind, das mit dem Umrichtergehäuse (32) in Kontakt kommt, wobei die Kanäle Teil des Kühlkreises (50) sind.

6. System (1) nach einem der Ansprüche 1 bis 3, wobei die Primärmaschine (10) ein Elektromotor ist.

7. System (1) nach Anspruch 7, wobei die Primärmaschine (10) ein Axialfluss-Elektromotor ist.

8. System (1) nach einem der Ansprüche 1 bis 5, wobei das Gesamtgehäuse (40) Mittel zur Befestigung (49) an einem Träger umfasst, wobei die Befestigungsmittel mit Dämpfungselementen versehen sind.

9. System (1) nach einem der vorangehenden Ansprüche, wobei das Gesamtgehäuse (40) eine Einlassöffnung (46) und eine Auslassöffnung (47) umfasst, die mit dem Kühlkreis (50) für die Zirkulation des Kühlfluids im Gesamtgehäuse (50) verbunden sind, und eine Einlassöffnung und eine Auslassöffnung, die mit einem Einlass und einem Auslass der Hydraulikmaschine (20) für die Zirkulation eines Arbeitsmediums der Hydraulikmaschine (20) verbunden sind.

## Claims

1. A system (1) comprising:
a primary machine (10), a hydraulic machine (20) and a frequency converter (30) disposed in an assembly casing (40),
wherein the hydraulic machine (20) is a hydraulic pump or a hydraulic motor adapted for operating by means of a work fluid, which enters the hydraulic machine (20) at a first pressure and exits it at a second pressure, distinct from the first pressure,
said system (1) being **characterized in that** it comprises a cooling circuit (50), adapted for a same coolant to go through a plurality of ducts adapted for cooling the primary machine (10), the frequency converter (30) and the hydraulic machine (20), the coolant is identical to a work fluid of the hydraulic machine (20).

2. The system (1) as claimed in claim 1, wherein
the primary machine (10) comprises a primary casing (12),
the hydraulic machine (20) comprises a machine casing (22),
the primary casing (12) and the machine casing (22) being secured to one another, and comprising inner ducts communicating at an interface between the primary casing (12) and the machine casing (22), allowing the passage of the coolant between the primary casing (12) and the machine casing (22).

3. The system (1) as claimed in claim 2, wherein all or part of said inner ducts are produced in such a way as to provide the circulation of coolant in planes perpendicular to an axis of the primary machine (10).

4. The system (1) as claimed in claim 2, wherein the frequency converter (30) comprises a converter casing (32), and wherein the primary casing (12) and the converter casing (32) are secured to one another, the cooling circuit (25) comprising ducts positioned between the primary casing (12) and the converter casing (32).

5. The system (1) as claimed in claim 3, wherein the primary casing (12) comprises ducts formed in a segment of said primary casing (12) coming into contact with the converter casing (32), said ducts forming part of the cooling circuit (50).

6. The system (1) as claimed in one of claims 1 to 3, wherein the primary machine (10) is an electric motor.

7. The system (1) as claimed in claim 6, wherein the primary machine (10) is an axial flux electric motor.

8. The system (1) as claimed in one of claims 1 to 5, wherein the assembly casing (40) comprises means (49) for attaching to a support, said attaching means being equipped with shock-absorbing elements.

9. The system (1) as claimed in one of the preceding claims, wherein the assembly casing (40) comprises an intake port (46) and a discharge port (47) connected to the cooling circuit (50) for the circulation of the coolant in the assembly casing (50), and an intake port and a discharge port connected to an intake and a discharge of the hydraulic machine (20) for the circulation of a work fluid of the hydraulic machine (20).
